# EUROPÄISCHE PATENTSCHRIFT

(11) **EP 3 468 734 B1**
(45) Veröffentlichungstag und Bekanntmachung des Hinweises auf die Patenterteilung: **15.07.2020**
(21) Anmeldenummer: 17727110.3
(22) Anmeldetag: 24.05.2017
(51) Int. Cl.: B23C 5/10

(54) **ELEKTRODENGRAFITFRÄSER SOWIE FRÄSER ZUR BEARBEITUNG VON OXIDKERAMIKEN**
ELECTRODE GRAPHITE MILLING CUTTER AND MILLING CUTTER FOR MACHINING OXIDE CERAMICS
FRAISE POUR L'USINAGE D'ÉLECTRODES EN GRAPHITE ET FRAISE POUR L'USINAGE DE CÉRAMIQUES OXYDÉES

(30) Priorität: 09.06.2016 DE 102016006995
(43) Veröffentlichungstag der Anmeldung: 17.04.2019
(73) Patentinhaber: Hufschmied Zerspanungssysteme GmbH, 86399 Bobingen (DE)
(72) Erfinder: HUFSCHMIED, Ralph, 86399 Bobingen (DE)
(74) Vertreter: Patentanwälte Munk
(86) Internationale Anmeldenummer: PCT/EP2017/025148
(87) Internationale Veröffentlichungsnummer: WO 2017/211462

(56) Entgegenhaltungen:
- WO-A1-2010/061933
- DE-U1-202015 106 056
- JP-A- H11 347 824
- US-A- 3 058 199
- US-A- 5 221 163
- US-A- 6 164 876
- US-A1- 2013 136 548
- US-A1- 2015 251 253

## Beschreibung

Die Erfindung betrifft einen Fräser gemäß dem Oberbegriff des Anspruchs 1, sowie einen Fräser zur Bearbeitung von Oxidkeramiken gemäß dem Oberbegriff des Anspruchs 15.

Elektrodengrafit ist meist synthetisch hergestellter Grafit, der neben dem bekannten Einsatz im Elektrolichtbogenschmelzverfahren in Stahlwerken auch in Bereichen wie Werkzeug- und Formenbau zum Funkenerodieren (EDM) eingesetzt wird. Dabei geht der Trend zu immer filigraneren Strukturen der mit den Grafitelektroden zu fertigenden Werkstücken, wodurch ein erhöhter Bedarf an Präzisionswerkzeugen zur Bearbeitung von Elektrodengrafit besteht.

An die zur Bearbeitung von Elektrodengrafit eingesetzten Fräswerkzeuge werden daher hohe Anforderungen in punkto Genauigkeit, aber auch Dauerfestigkeit gesetzt. Denn Grafit ist ein hoch abrasiver Werkstoff, der hohe Schnittgeschwindigkeiten bei der Zerspanung erfordert und aufgrund der dabei entstehenden, abrasiven Staubkörner eine schnelle Abnutzung und damit einen schnellen Verlust des Fräswerkzeugs hervorruft.

Speziell für die Grafitbearbeitung geschaffene Zerspanungswerkzeuge weisen daher entsprechende Werkzeuggeometrien auf, die auf die Härte von bis zu 90 Shore und auf die aufgrund der bei der Zerspanung entstehenden Kohlenstoffkörner hohe Abrasivität des Werkstoffs bei gleichzeitig engen Fertigungstoleranzen aufgrund der Feinkörnigkeit des Werkstoffs (bis zu 0,5 µm möglich) angepasst sind.

Im allgemeinen geschieht die Herstellung einer Grafitelektrode daher in zwei bis drei Schritten, wobei zunächst eine Schrupp- bzw. Grobbearbeitung erfolgt, in der möglichst viel Material in möglichst kurzer Zeit abgetragen wird. Anschließend wird dann geschlichtet bzw. fein bearbeitet, wobei häufig ein Vorschlichtarbeitsgang und ein Nachschlichtarbeitsgang erfolgt, in dem dann die genaue Endgeometrie der Elektrode aus dem Elektrodengrafitrohling herausgefräst wird.

So zeigt beispielsweise die europäische Patentschrift EP 2 540 427 B1 einen Elektrodengrafitfräser mit einem Schneidkopf in Kugelkopfgeometrie, ebenso die JP 08141816 A. Dadurch gelingt eine hohe Maßgenauigkeit bei der Feinbearbeitung, auch bei komplizierten Werkstückgeometrien. Elektrodengrafitfräser mit anderen Werkzeuggeometrien mit einer Vielzahl von Schneidplatten an der Stirnseite oder am Umfang des Fräsers eignen sich dagegen mehr für die möglichst zügige Grobbearbeitung, siehe beispielsweise DE 102 47 715 A1 bezüglich der Schneidplatten an der Stirnseite des Fräsers, und DE 10 2005 044 015 B4 bezüglich zahnartig angebrachter Schneidplatten am Umfang des Fräsers.

Die US-Patentschrift US 6,164,876 zeigt einen Fräser mit der für die Freiform-Bearbeitung auf Endgenauigkeit von Grafitwerkstücken notwendigen Kugelkopfgeometrie, welcher vier Stege aufweist, von denen zwei als Grobbearbeitungsstege mit Spanbrechernuten und zwei als Feinbearbeitungsstege mit sich entlang der Stege erstreckenden Schneidkanten ausgeführt sind. Während an den Grobbearbeitungsstegen mit den dortigen, quer zur Werkzeugachse eingebrachten Rillen eine Vorzertrümmerung des Materials erfolgt, dienen die sich mit den Feinbearbeitungsstegen um die Werkzeugachse rechtsverdrallt gewendelten Schneidkanten zum Nachreiben.

Aus der Bearbeitung von anderen, weniger abrasiven und sprödharten, aber durchaus auch schwer zerspanbaren Materialien wie beispielsweise CFK ist bereits das Konzept bekannt, an einem einzigen Werkzeug sowohl Schrupp- als auch Schlicht- Schneiden vorzusehen. So zeigt beispielsweise die DE 10 2012 019 804 A1 einen Fräser gemäß dem Oberbegriff des Anspruchs 1 zur Bearbeitung von faserverstärkten Werkstoffen wie CFK, welcher Vorbearbeitungsstege mit Zähnen für die Schruppbearbeitung und Nachbearbeitungsstege mit an Mantelrillen vorgesehenen, umfangsseitigen Schlichtschneiden zum Schlichten bzw. Nachreiben aufweist. Dadurch kann mit einem einzigen Fräswerkzeug geschruppt bzw. grob bearbeitet und nachgeschlichtet bzw. fein bearbeitet werden. Beim Nachschlichten werden dabei die nach dem Schruppen aus dem Werkstück herausragenden Fadenenden des faserverstärkten Kunststoffs abgetrennt. Man spart sich also einen Arbeitsgang. Das Prinzip dabei ist, die bei der Bearbeitung anfallenden Lasten bzw. Aufgaben auf unterschiedlich ausgebildete Schneiden zu verteilen.

Hiervon ausgehend ist es Aufgabe der vorliegenden Erfindung, einen Fräser der gattungsgemäßen Art im Hinblick auf die bei der Bearbeitung von Grafit erzielbare Bearbeitungsgenauigkeit, -geschwindigkeit und Standzeit weiter zu verbessern. Weiterhin ist es ist es Aufgabe der vorliegenden Erfindung, einen entsprechenden Fräser zur Bearbeitung von Oxidkeramiken zu schaffen.

Diese Aufgabe wird hinsichtlich des Fräsers mit den Merkmalen des Anspruchs 1 gelöst, hinsichtlich des Fräsers zur Bearbeitung von Oxidkeramiken mit den Merkmalen des Anspruchs 15.

Dabei weist der erfindungsgemäße Elektrodengrafitfräser bzw. Fräser zur zerspanenden Bearbeitung von Elektrodengrafit eine Kugelkopfgeometrie auf, sowie Grob- und Feinbearbeitungsstege, wobei diese Bearbeitungsstege jeweils einen umfangsseitigen Arbeitsbereich mit einer zylinderoberflächensegmentförmigen Mantelfläche aufweisen, also nicht nur eine herkömmliche, der vorlaufenden Spannut zugewandte Schneidkante mit einer daran rückseitig möglicherweise noch anschließenden, gegenüber dem umfangsseitigen Arbeitsbereich aber schmalen bzw. schmaleren Rundschlifffase. Dabei weist der Arbeitsbereich jedes Grobbearbeitungsstegs eine Vielzahl von Zähnen auf, die in die zylinderobenflächensegmentförmige Mantelfläche eingearbeitet sind und zwar so, dass der Arbeitsbereich des Grobbearbeitungsstegs als umfangsseitige Feile ausgebildet ist, d.h. dass die Zähne in mehreren, in Umfangsrichtung aufeinander folgenden Zahnreihen in die Mantelfläche des Arbeitsbereichs eingearbeitet sind. Ferner weist der Arbeitsbereich jedes Feinbearbeitungsstegs erfindungsgemäß eine Mehrzahl von Mantelrillen auf, die in die Mantelfläche des Arbeitsbereichs parallel zueinander mit Drall um die Werkzeugachse und mit Steigung zu der dem zumindest einen Nachbearbeitungssteg vorlaufenden Spannut eingearbeitet sind, wobei die Mantelrillen Mantelstege mit jeweils einer umfangsseitigen Schneide bzw. Umfangsschneide beabstanden.

Im Gegensatz zu bloßen Spanbrechernuten, die eine gewöhnliche Schneidkante entlang des an die vorlaufende Spannut anschließenden Schneidkeils unterbrechen, um so die Spanabfuhr zu erleichtern, sind die Mantelstege hinter den Mantelrillen im umfangsseitigen Arbeitsbereich des Feinbearbeitungsstegs also angeschliffen bzw. scharf und tragen jeweils selbst eine Umfangsschneide, die alternativ oder ergänzend zu einer gewöhnlichen Schneidkante an dem an die vorlaufende Spannut anschließenden Schneidkeil schlichtend auf das zu bearbeitende Elektrodengrafitwerkstück einwirkt. Dadurch, dass die Mantelrillen und damit die im umfangsseitigen Arbeitsbereich des Feinbearbeitungsstegs vorgesehenen Umfangsschneiden jeweils mit Steigung zur vorlaufenden Spannut verlaufen, wird sichergestellt, dass dabei nicht nur die an die vorderste Schneide entlang der vorlaufenden Spannut zum Angriff an das zu zerspanende Material kommt, sondern sämtliche Schneiden entlang der Mantelrillen im umfangsseitigen Arbeitsbereich zum Nachschlichten beitragen. Durch den Drall um die Werkzeugachse wird sichergestellt, dass die Umfangs- bzw. Mantelschneiden überhaupt in Angriff an das zu zerspanende Grafit gelangen. Die Umfangsschneiden können dabei jeweils einen positiven Spanwinkel von 5 bis 15°, insbesondere 8° aufweisen. Der umfangsseitige Arbeitsbereich an dem Feinbearbeitungssteg ist also von spiralsegmentförmig verlaufenden, parallel nebeneinander angeordneten Mantelrillen durchsetzt, an die jeweils ein Mantelsteg mit einer entlang der Rille bzw. dem Steg verlaufenden Schneide anschließt.

Bei der Zerspanung von Grafit kommt es kaum zu plastischen Verformungen, dafür jedoch zu Zerrüttungseffekten durch Druckspannungen unterhalb der Schneide und damit zu einer Feinstaubbildung anstatt einer Spanbildung. Dabei werden Mikrorisse im Material in einer Zerrüttungszone erzeugt, die der Schneide voraus läuft.

Überraschend hat sich gezeigt, dass die vorstehende, aus der Bearbeitung von CFK an sich bekannte Ausbildung der Bearbeitungsstege gerade für die Zerspanung von staubförmig zerspanendem, sprödharten und abrasiven Elektrodengrafit besonders vorteilhaft ist. Denn die vielen kleinen Zähne der Schrupp- bzw. Grobbearbeitungsstege zertrümmern nicht nur das Material an der Bearbeitungsstelle, sondern provozieren dabei auch besonders viele, kleine Mikrorisse im Grafitverbund vor der Bearbeitungsstelle und sind gleichzeitig sehr stabil gegen Verschleiß. Die Schlichtschneiden entlang der Mantelrillen der Schlicht- bzw. Feinbearbeitungsstege glätten dann die von dem vorlaufenden Grobbearbeitungssteg bearbeitete Schnittfläche ein und führen das durch die vorauslaufenden Rissfronten bereits angebrochene Material im Vorbeilauf ab, wodurch sich insgesamt auch bei hohen Arbeitsgeschwindigkeiten glatte Oberflächen ergeben. Dadurch, dass die Arbeitsbereiche der Stege, in denen die Zerspanung ausgeführt wird, zylinderoberflächensegmentförmig sind und nicht nur eine Schneidkante entlang des der vorlaufenden Spannut zugewandten Schneidkeils umfassen, also im Querschnitt des Fräsers eine gewisse Bogenlänge überdecken, verteilen sich die Kräfte über eine größere Fläche bzw. auf mehr Angriffspunkte, so dass sehr gute Oberflächengüten erzielt werden. Gleichzeitig kommt es zu einer Aussteifung des Werkzeugs während der Bearbeitung.

Weiterhin erfindungsgemäß weist der Elektrodengrafitfräser dabei einen ersten Teil der Bearbeitungsstege auf, bei dem die bzw. der Arbeitsbereich weiter zur Werkzeugspitze hin reicht als bei einem zweiten Teil der Bearbeitungsstege, bei dem die bzw. der Arbeitsbereich bereits weiter hinten endet, z. B. weiter als 2-5mm, bevorzugt weiter als 4mm weiter hinten. Vorteilhaft ist es dabei, wenn der erste Teil der Bearbeitungsstege diejenigen bzw. denjenigen Feinbearbeitungssteg umfasst, welcher bzw. welche linksverdrallte Umfangsschneiden aufweisen und der zweite Teil der Bearbeitungsstege diejenigen bzw. denjenigen Bearbeitungssteg umfass5t, welcher bzw. welche rechtsverdrallte Umfangsschneiden aufweisen.

Insgesamt gelingt es mit einem solchen Elektrodengrafitfräser, sehr feine Konturen mit hoher Arbeitsgeschwindigkeit aus dem Elektrodengrafit heraus zu arbeiten, z. B. schlanke Stifte im Längen-Durchmesser-Verhältnis von 20 : 1 und größer. Es ergibt sich ferner eine zur Funktionenteilung in Grobbearbeitung mittels Zähnen und Feinbearbeitung mittels Umfangsschneiden ergänzende Unterteilung des Fräswerkzeugs in einen hauptsächlich zur Feinbearbeitung vorgesehenen Kugelkopfabschnitt, in dem zumindest die zum Schlichten dienenden Umfangsschneiden lediglich Drucklasten ausüben und in einen hauptsächlich zum Erzeugen weniger filigraner Werkstückgeometrie mit hohen Bearbeitungsgeschwindigkeiten vorgesehenen Schneidabschnitt dahinter, in dem sowohl ziehende, als auch schiebende Schlichtschneiden vorgesehen sind.

Vorteilhafte Weiterbildungen sind Gegenstand der Unteransprüche.

So können die Spannuten prinzipiell gerade genutet oder auch linksverdrallt sein. Bevorzugt ist es jedoch, wenn die Spannuten einen Rechtsdrall aufweisen, wodurch die Abfuhr des abgetragenen, staubförmigen Grafits erleichtert wird.

Um die Schneidarbeit an den umfangsseitigen Schlichtschneiden der Feinbearbeitungsstege auf möglichst große Schneidenlängen zu verteilen und damit die gegenüber konventionellen Schneidkanten entlang der Spannuten schon lange Gesamtschneidenlänge weiter zu steigern, ist es dabei günstig, wenn die Mantelrillen und damit die Umfangsschneiden sich mit relativ kleinem Spiralwinkel von beispielsweise kleiner 30° um die Werkzeugachse wendeln.

Vorteilhaft erstrecken sich dabei die Arbeitsbereiche mit den Zähnen bzw. Umfangsschneiden an zumindest einem Teil der Bearbeitungsstege in den abgerundeten Kugelkopfabschnitt hinein, so dass mit dem mit den Zähnen bzw. Schneiden versehenen Kugelkopfabschnitt sehr feine Konturen aus dem Elektrodengrafitwerkstück herausgearbeitet werden können. Aufgrund der gerade im spitzen nahen Bereich am Kugelkopfradius auftretenden hohen Schnittkräfte ist es jedoch bevorzugt, wenn sich die Arbeitsbereiche nicht aller Bearbeitungsstege in den Kugelkopfabschnitt hinein erstrecken, sondern sich lediglich an einem Teil

der Bearbeitungsstege der Arbeitsbereich bis in den Kugelkopfabschnitt hinein fortsetzt. Dadurch können die Schnittkräfte an der hauptsächlich zur Feinbearbeitung dienenden, kugeligen Werkzeugspitze im vertretbaren Rahmen gehalten werden.

Weiterhin vorteilhaft ist es dabei, wenn sich alle Zähne aufweisenden Arbeitsbereiche der Grobbearbeitungsstege in den abgerundeten Kugelkopfabschnitt hinein erstrecken, aber nicht alle Umfangsschneiden aufweisenden Arbeitsbereiche der Feinbearbeitungsstege.

Diese Weiterbildung ergibt insbesondere zusammen mit einer vorteilhaften Ausgestaltung des Elektrodengrafitfräsers Vorteile, bei der der Elektrodengrafitfräser eine geradzahlige Mehrzahl, insbesondere zwei Feinbearbeitungsstege aufweist, wobei die Umfangsschneiden im Arbeitsbereich der einen Hälfte der Feinbearbeitungsstege mit Rechtsdrall um die Werkzeugachse verlaufen und die Umfangsschneiden im Arbeitsbereich der anderen Hälfte der Feinbearbeitungsstege mit Linksdrall. Denn dann kann sich jeder die linksverdrallten Umfangsschneiden aufweisende Feinverarbeitungssteg in den Kugelkopfabschnitt hinein erstrecken, wohingegen kein die rechtsverdrallten Umfangsschneiden aufweisender Feinbearbeitungssteg in den Kugelkopfabschnitt hinein geführt ist.

Die vorzugsweise abwechselnd mit links- bzw. rechtsverdrallten Umfangsschneiden versehenen Feinverarbeitungsstege haben dabei den vorteilhaften Effekt, dass das Werkstück abwechseln mit Druck und Zug belastet wird, wobei die linksverdrallten Umfangsschneiden eine Druckbeaufschlagung bewirken und die rechtsverdrallten Umfangsschneiden eine Zugbeaufschlagung. Dadurch, dass Feinbearbeitungsstege mit in entgegengesetzte Richtung verlaufenden Umfangsschneiden vorgesehen sind und damit gegensätzliche Kraftbeaufschlagungswirkungen auf das Werkstück wirken, ergibt sich bereits ein gewisser Ausgleich der im und entgegen der Werkzeugachse zur Werkzeugspitze hin wirkenden Kräfte auf das Werkstück und damit eine gleichförmigere Zerspanung (bzw. eigentlich: Zerbröselung) und eine verbesserte Oberflächenqualität.

Dadurch, dass dabei die schiebenden, also linksverdrallten Umfangsschlichtschneiden bis in den Kugelkopfabschnitt hinein ausgeführt sind und die ziehenden, also rechtsverdrallten Umfangsschlichtschneiden nur am Umfang, also im an dem Kugelkopfabschnitt in Richtung zum Schaft hin anschließenden Schneidbereich mit im Wesentlichen konstanten Durchmesser, macht man sich eine Werkstoffeigenschaft des Elektrodengrafits zunutze, um dadurch die Arbeitsgeschwindigkeit auch bei filigranen Geometrien weiter steigern zu können. Denn der Elektrodengrafit ist viel druckstabiler als zugstabil. Die am besonders für die Feinbearbeitung vorgesehenen Kugelkopfabschnitt vorgesehenen, drückenden, bzw. ziehenden, linksverdrallten Umfangsschneiden üben lediglich eine Drucklast auf das Werkstück aus, welche aufgrund der Druckstabilität von Grafit wesentlich weniger ins Gewicht fällt, als es ziehende bzw. rechtsverdrallte Schlicht- bzw. Umfangsschneiden im für die Feinverarbeitung vorgesehenen Kugelkopfabschnitt tun würden. Der Kugelkopfabschnitt kann daher sehr glatte Oberflächen schaffen und der weiter hinten liegende Schneidabschnitt sehr schnell arbeiten. Es wäre aber beispielsweise auch denkbar, den für die Erzeugung von Feinstrukturen vorgesehenen, spitzennahen Abschnitt des Fräsers weiter in Richtung Schaft nach hinten auszudehnen oder lediglich einen spitzenseitigen Teilabschnitt des Kugelkopfs dafür zu verwenden.

Vorteilhaft im Sinne einer gleichmäßigen Schnittkraftverteilung ist es dabei, wenn der Elektrodengrafitfräser eine zu der geradzahligen Mehrzahl von Feinbearbeitungsstegen passende geradzahlige Mehrzahl von Grobbearbeitungsstegen aufweist, in der bevorzugten Ausführungsform also zwei Grobbearbeitungsstege, und über den Umfang abwechseln jeweils ein Feinbearbeitungssteg auf einen Grobbearbeitungssteg folgt und umgekehrt. Sobald die Zähne am Grobbearbeitungssteg das Elektrodenmaterial vorzertrümmert haben und Mikrorisse in dem Schneidbereich vorlaufenden Fronten erzeugt haben, folgt dann jeweils ein Feinbearbeitungssteg, dessen Umfangsschneiden das so bereits gelockerte Material abtragen. Durch die abwechselnd schiebende und ziehende Geometrie der Fein- bzw. Schlichtbearbeitungsstege erfolgt dabei ein Ausgleich der auf das Werkstück einwirkenden Zug- und Drucklasten.

Dabei erstrecken sich die Arbeitsbereiche einiger der Bearbeitungsstege zwar in den Kugelkopfabschnitt hinein, d. h. sie reichen bis in einen spitzennahen Bereich, in dem ihre Mantelfläche bereits in die kuglige Krümmung des Kugelkopfs übergeht. Gemäß einer vorteilhaften Weiterbildung reichen sie jedoch nicht bis ganz zur Werkzeugspitze hin. Anstatt dessen ist im an den jeweiligen Arbeitsbereich anschließenden, spitzennahen Bereich des Kugelkopfabschnitts vorteilhaft eine konventionelle Schneidkante vorgesehen, d.h. eine am Übergang der nach radial außen gewandten Umfangsseite zu der der jeweils vorlaufenden Spannut zugewandten Flanke des Bearbeitungsstegs vorgesehene Schneidkante. Es wäre jedoch ebenfalls denkbar, auch entlang der Arbeitsbereiche scharfe Schneidkanten an dem der vorlaufenden Spannut zugewandten Schneidkeil des jeweiligen Grob- oder Feinbearbeitungsstegs vorzusehen. Weiter bevorzugt weisen die Stege an den Schneidkanten im spitzennahen Bereich des Kugelkopfabschnitts vor dem jeweiligen Arbeitsbereich über den Kugelkopfradius verteilt Spanbrechernuten auf, um den Schnittdruck zu reduzieren.

Gemäß einer weiteren vorteilhaften Weiterbildung der Erfindung sind die Bearbeitungsstege dabei äquidistant über den Werkzeugumfang verteilt. Gemäß einer weiteren vorteilhaften Weiterbildung der Erfindung erstrecken sich die Arbeitsbereiche der Bearbeitungsstege zumindest im Schneidabschnitt hinter dem Kugelkopfabschnitt jeweils über eine Bogenlänge, die größer oder gleich der Gesamtbogenlänge geteilt durch die dreifache, bevorzugt doppelte Anzahl der Spannuten ist.

Die Zähne an den Grobbearbeitungsstegen können vorteilhaft eine polygonale, insbesondere rautenförmige Grundfläche und bevorzugt eine Pyramidenform aufweisen. Die Höhe der Zähne entspricht dabei vorteilhaft der Tiefe der Mantelrillen der Feinbearbeitungsstege, welche vorteilhaft an allen Feinbearbeitungsstegen gleich ist. Besonders bevorzugt für die Höhe der Zähne ist eine dem 0,5 bis 1,5 - fachen der Tiefe der Mantelrillen entsprechender Wert, insbesondere ein der Tiefe der Mantelrillen entsprechender Wert.

Um die Wechselschnittgeometrie an den Schlicht- bzw. Feinbearbeitungsstegen mit links- und rechtsverdrallten Mantelrillen im Hinblick auf eine abwechselnd ziehende und drückende Belastung des Werkstücks beim Fräsbearbeiten noch zu ergänzen - oder alternativ dazu - kann die rautenförmige Grundfläche der Zähne dabei jeweils eine sich überwiegend längs der Werkzeugachse erstreckende Längsdiagonale und eine sich überwiegend quer zur Werkzeugachse erstrecke Querdiagonale aufweisen, wobei die Längsdiagonalen der Zähne an der einen Hälfte der Grobbearbeitungsstege mit Linksdrall um die Werkzeugachse verlaufen und die Längsdiagonalen der Zähne an der anderen Hälfte der Grobbearbeitungsstege mit Rechtsdrall. Es ergibt sich somit an den Grobbearbeitungsstegen mit den linksverdrallten Längsdiagonalen eine schiebende bzw. drückende Geometrie und an den Grobbearbeitungsstegen mit den rechtsverdrallten Diagonalen eine ziehende Geometrie, also insgesamt derselbe vorteilhafte Effekt, der schon bei den Schlichtschneiden zu beobachten ist, nämlich eine Lastaufteilung, jetzt aber beim Einbringen von Mikrorissen und ein Zerrütten des Materials.

Es versteht sich, dass es für die Lastverteilung am Werkstück, und damit für die erzielbare Genauigkeit und Arbeitsgeschwindigkeit von Vorteil ist, wenn der Kugelkopfabschnitt mit seinem größten Außendurchmesser in den in Axialrichtung im Wesentlichen konstant mit diesem Durchmesser zum Schaft hin verlaufenden Schneidabschnitt übergeht, und der Kugelkopfabschnitt, der Schneidabschnitt und der Schaft insgesamt einstückig aus einem einzigen Materialstück hergestellt sind. Denn beispielsweise gelötete oder anderweitig mehrstückig gefertigte Werkzeuge weisen nicht die für die Bearbeitung von Elektrodengrafit nötige Belastbarkeit auf. Vielmehr ist es vorteilhaft, wenn das Material, aus dem der Elektrodengrafitfräser besteht, ein Hartmetall ist, welches ferner mit einer Hartstoffbeschichtung versehen sein kann, um der hohen Abrasivität des Elektrodengrafits zu begegnen. Als Material für die Hartstoffschicht kommt beispielsweise ein polykristalliner Diamant oder kubisches Bornitrid in Frage.

Die Erfindung wurde speziell im Hinblick auf einen Fräser zur Bearbeitung von Elektrodengrafit gemacht. Aufgrund der sich dabei zeigenden Vorteile, die sich gerade aus dem Zusammenwirken der erfindungsgemäßen Werkzeuggeometrie mit den Materialeigenschaften des sprödharten, pulverförmig zerspanenden Elektrodengrafits ergeben, wird davon ausgegangen, dass sich der Fräser auch für die Zerspanung von anderen sprödharten, pulverförmig zerspanenden Werkstoffen gut eignet. Die Erfindung betrifft daher auch einen Fräser zur Bearbeitung von Oxidkeramiken, insbesondere von zahnmedizinischen Zirkondioxidkeramiken oder anderen pulverförmig zerspanenden Materialien wie Polyurethanguss, welcher die Merkmale des Elektrodengrafitfräsers nach einem der Ansprüche aufweist.

Im Folgenden wird anhand der beiliegenden Zeichnungen eine vorteilhafte Ausführungsform der Erfindung näher erläutert. Es zeigen:
- Figur 1: eine vergrößerte Stirnansicht auf die Werkzeugspitze eines Elektrodengrafitfräsers gemäß einer Ausführungsform der Erfindung;
- Fig. 2 bis 5: Seitenansichten des in Fig. 1 gezeigten Elektrodengrafitfräsers in 90°-Schritten während eines Umlaufs;
- Figur 6: Einzelheit VI in Fig. 3; und
- Figur 7: Einzelheit VII in Fig. 5.

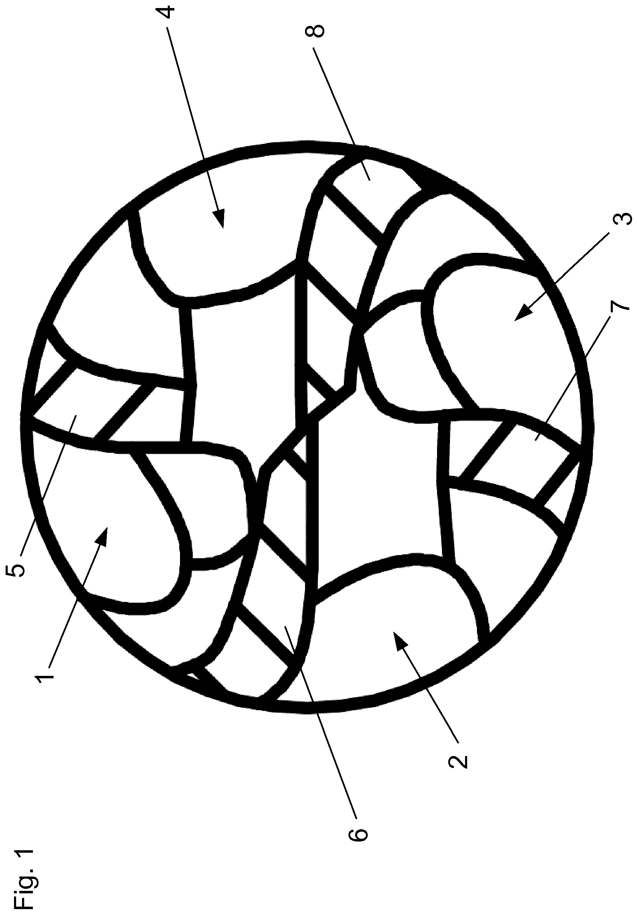

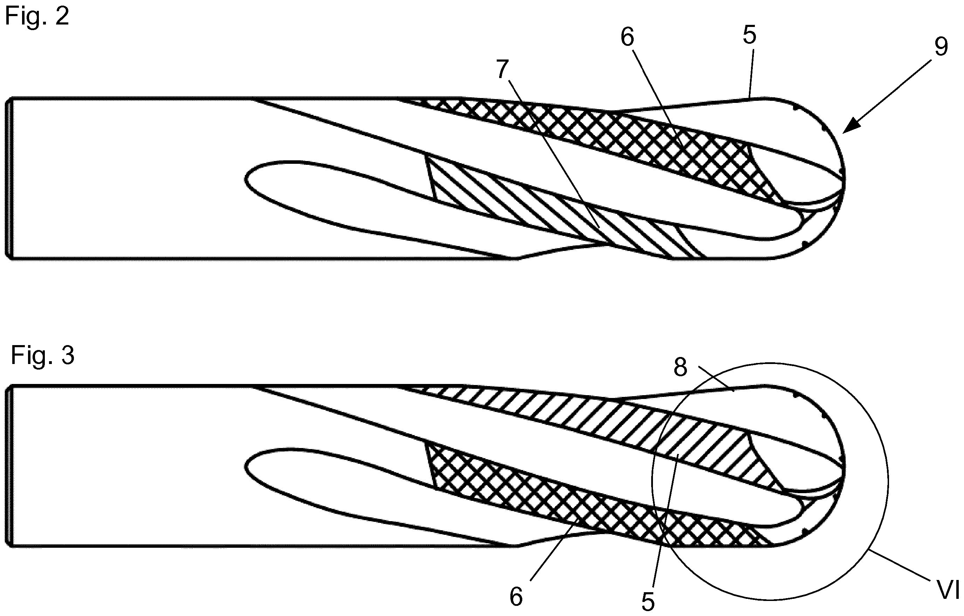

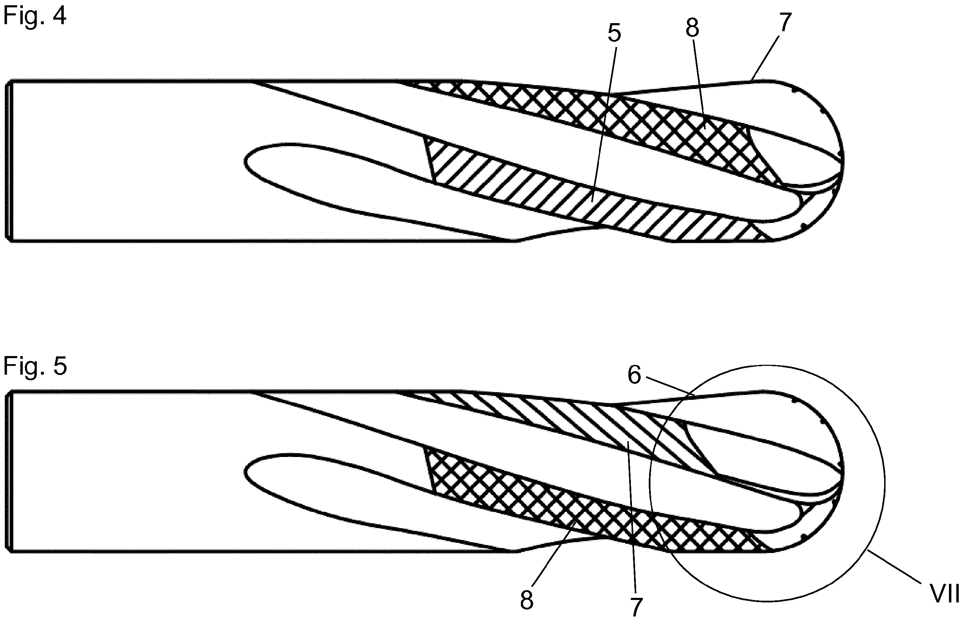

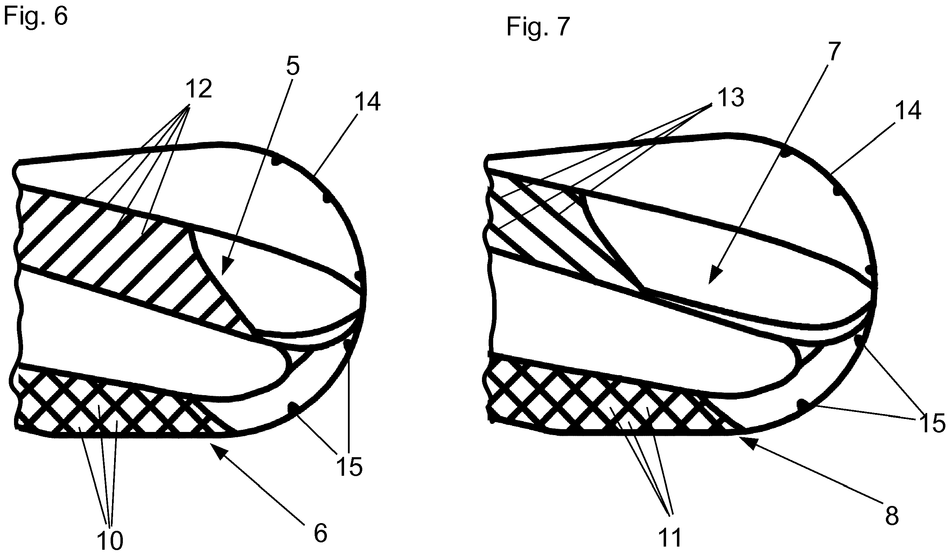

Der in den Figuren gezeigte Elektrodengrafitfräser weist, wie insbesondere aus der Fig. 1 vorgeht, vier äquidistant beabstandete Spannuten 1, 2, 3, 4 auf, welche um ein Kernsegment des Elektrodengrafitfräsers herum platzierte Bearbeitungsstege 5, 6, 7, 8 in Umfangsrichtung voneinander beabstanden. Wie den Figuren 2-5 zu entnehmen ist, sind dabei zwei der Bearbeitungsstege 5, 6, 7, 8 als Grobbearbeitungsstege 6, 8 mit eine umfangsseitige Feile bildenden Zähnen 10, 11 ausgebildet, die beiden anderen als Feinbearbeitungsstege 5, 7 mit umfangsseitigen Mantelrillen, welche Mantelstege voneinander beabstanden, die jeweils eine umfangsseitige Schneide 12, 13 tragen. Die Zähne 10, 11 und die umfangsseitigen Schneiden 12, 13 sind dabei in den Figuren 6 und 7 bezeichnet und befinden sich jeweils in einem von einer - gedachten - zylindrischen Mantelhülle eingehüllten, umfangsseitigen Arbeitsbereich

Der Elektrodengrafitfräser weist dabei eine als Kugelkopfabschnitt 9 ausgebildete Werkzeugspitze auf, in dem die Bearbeitungsstege 5, 6, 7, 8 eine einem Kugelkopfradius folgende Außenkontur haben. Dabei erstrecken sich an den Grobbearbeitungsstegen 6, 8 die Arbeitsbereiche mit den Zähnen 10, 11 bis in den Kugelkopfabschnitt 9 hinein. Während sich einer der Arbeitsbereiche mit linksverdrallten, also drückenden Schlichtschneiden am Nachbearbeitungssteg 5 bis in den Kugelkopfabschnitt 9 hinein erstreckt, endet der Arbeitsbereich mit rechtsverdrallten Schlichtschneiden 13 am anderen Feinbearbeitungssteg 7 bereits vor dem Kugelkopfabschnitt 9, also weiter hinten. Dadurch wird vermieden, dass im hauptsächlich zum Herausarbeiten von filigranen Geometrien eingesetzten Kugelkopfabschnitt eine stark ziehende Belastung auf das wesentlich druckstabilere als zugstabile Elektrodengrafit aufgebracht wird, so dass sich mit dem Kugelkopfabschnitt filigrane Geometrien erzeugen lassen.

Im Kugelkopfabschnitt 9 sind dagegen in den an die Arbeitsbereiche der Bearbeitungsstege 5, 6, 7, 8 spitzenseitig anschließenden Bereichen die Kanten am entlang des Kugelkopfradius verlaufenden Übergang von der Umfangsseite zur jeweils vorlaufenden Spannut scharf, also als Schneidkanten 14 ausgebildet, wie ebenfalls in den Figuren 6 und 7 eingezeichnet ist. Die Schneidkanten 14 sind dabei zusätzlich mit Spanbrechernuten 15 versehen, um den Schnittdruck zu reduzieren.

Abweichungen und Modifikationen der gezeigten Ausführungsformen sind möglich, ohne den Rahmen der Erfindung zu verlassen.

## Patentansprüche

1. Fräser, mit einem Schaft einenends und einer Werkzeugspitze anderenends, und mit sich vom Schaft zur Werkzeugspitze erstreckenden Spannuten (1, 2, 3, ,4), welche Bearbeitungsstege (5, 6, 7, 8) in Umfangsrichtung voneinander beabstanden, wobei
zumindest einer der Bearbeitungsstege (6, 8) als Grobbearbeitungssteg (6, 8) und zumindest ein anderer der Bearbeitungsstege (5, 7) als Feinbearbeitungssteg (5, 7) ausgebildet ist, und wobei
die Bearbeitungsstege (5, 6, 7, 8) jeweils einen umfangsseitigen Arbeitsbereich mit einer zylinderoberflächensegmentförmigen Mantelfläche aufweisen, wobei der Arbeitsbereich jedes Grobbearbeitungsstegs (6, 8) als umfangsseitige Feile mit einer Vielzahl Zähnen (10, 11) ausgebildet ist, die in die Mantelfläche des Arbeitsbereichs eingearbeitet sind, und
der Arbeitsbereich jedes Feinbearbeitungsstegs (5, 7) eine Mehrzahl von mit Drall um die Werkzeugachse verlaufenden Mantelrillen aufweist, die in die Mantelfläche des Arbeitsbereichs parallel zueinander und mit Steigung zur dem zumindest einen Feinbearbeitungssteg (5, 7) vorlaufenden Spannut (1, 3) eingearbeitet sind, wobei die Mantelrillen Mantelstege mit jeweils einer Umfangsschneide (12, 13) beabstanden,
**dadurch gekennzeichnet, dass**
die Werkzeugspitze als Kugelkopfabschnitt (9) ausgebildet ist, in dem die Bearbeitungsstege (5, 6, 7, 8) jeweils eine abgerundete, insbesondere entlang eines Kugelkopfradius verlaufende Kontur aufweisen, wobei
die Arbeitsbereiche an einer ersten Gruppe (5, 6, 8) von Bearbeitungsstegen (5, 6, 7, 8) weiter zur Werkzeugspitze hinreichen als an einer zweiten Gruppe (7) von Bearbeitungsstegen (5, 6, 7, 8) und wobei der Fräser ein Elektrodengrafitfräser ist.

2. Fräser nach Anspruch 1, **dadurch gekennzeichnet, dass** sich die Spannuten (1, 2, 3, ,4) mit Rechtsdrall um die Werkzeugachse erstrecken.

3. Fräser nach Anspruch 1 oder 2, **dadurch gekennzeichnet, dass** sich an zumindest einem Teil (5, 6, 8) der Bearbeitungsstege (5, 6, 7, 8) der dortige, Zähne (10, 11) oder Umfangsschneiden (12) aufweisende Arbeitsbereich in den abgerundeten Kugelkopfabschnitt (9) hinein erstreckt

4. Fräser nach Anspruch 3, **dadurch gekennzeichnet, dass** sich an einem verbleibenden Teil (7) der Bearbeitungsstege (5, 6, 7, 8) der dortige Arbeitsbereich nicht in den abgerundeten Kugelkopfabschnitt (9) hinein erstreckt.

5. Fräser nach einem der vorhergehenden Ansprüche, **dadurch gekennzeichnet, dass** sich alle Zähne (10, 11) aufweisenden Arbeitsbereiche der Grobbearbeitungsstege (6, 8) in den abgerundeten Kugelkopfabschnitt (9) hinein erstrecken und sich zumindest nicht alle Umfangsschneiden (12, 13) aufweisenden Arbeitsbereiche der Feinbearbeitungsstege (5, 7) in den abgerundeten Kugelkopfabschnitt (9) hinein erstrecken.

6. Fräser nach einem der vorhergehenden Ansprüche, **dadurch gekennzeichnet, dass** er eine geradzahlige Mehrzahl von Feinbearbeitungsstegen (5, 7) aufweist, wobei die Umfangsschneiden (13) im Arbeitsbereich der einen Hälfte der Feinbearbeitungsstege (7) mit Rechtsdrall um die Werkzeugachse verlaufen und die Umfangsschneiden (12) im Arbeitsbereich der anderen Hälfte der Feinbearbeitungsstege (5) mit Linksdrall um die Werkzeugachse verlaufen.

7. Fräser nach Anspruch 6, **dadurch gekennzeichnet, dass** die geradzahlige Mehrzahl von Feinbearbeitungsstegen (5, 7) gleich zwei ist.

8. Fräser nach Anspruch 6 oder 7, **dadurch gekennzeichnet, dass** sich an jedem den Arbeitsbereich mit den linksverdrallten Umfangsschneiden (12) aufweisenden Feinbearbeitungssteg (5) der Arbeitsbereich in den Kugelkopfabschnitt (9) hinein erstreckt, aber an keinem den Arbeitsbereich mit den rechtsverdrallten Umfangsschneiden (13) aufweisenden Feinbearbeitungssteg (7).

9. Fräser nach Anspruch 6, 7 oder 8, **dadurch gekennzeichnet, dass** der erste Teil (5, 6, 8) der Bearbeitungsstege (5, 6, 7, 8) die den Arbeitsbereich mit den linksverdrallten Umfangsschneiden (12) aufweisende Hälfte der Feinbearbeitungsstege (5) umfasst und der zweite Teil (7) der Bearbeitungsstege (5, 6, 7, 8) die den Arbeitsbereich mit den rechtsverdrallten Umfangsschneiden (13) aufweisende Hälfte der Feinbearbeitungsstege (7).

10. Fräser nach einem der vorhergehenden Ansprüche, **dadurch gekennzeichnet, dass** er eine geradzahlige Mehrzahl von Grobbearbeitungsstegen (6, 8) aufweist, wobei von den Bearbeitungsstegen (5, 6, 7, 8) die gleiche Mehrzahl als Grobbearbeitungsstege (6, 8) und als Feinbearbeitungsstege (5, 7) ausgebildet sind, und wobei jedem Grobbearbeitungssteg (6, 8) einer der Feinbearbeitungsstege (5, 7) nachläuft.

11. Fräser nach Anspruch 10, **dadurch gekennzeichnet, dass** die geradzahlige Mehrzahl von Grobbearbeitungsstegen (6, 8) gleich zwei ist.

12. Fräser nach einem der vorhergehenden Ansprüche, **dadurch gekennzeichnet, dass** die Bearbeitungsstege (5, 6, 7, 8) zumindest in einem an den jeweiligen Arbeitsbereich spitzenseitig anschließenden Bereich des Kugelkopfabschnitts (9), im gesamten Kugelkopfabschnitt oder auch im weiteren Verlauf der Spannuten (1, 2, 3, ,4) am Übergang von ihren nach radial außen gewandten Umfangsseiten zu ihren der jeweils vorlaufenden Spannut (1, 2, 3, ,4) zugewandten Flanken jeweils eine Schneidkante (14) aufweisen, wobei zumindest einer, bevorzugt alle Bearbeitungsstege (5, 6, 7, 8) an den Schneidkanten (14) im spitzenseitigen Bereich des Kugelkopfabschnitts (9) über den Kugelkopfradius (9) verteilt Spanbrechernuten (15) aufweisen.

13. Fräser nach einem der vorhergehenden Ansprüche, **dadurch gekennzeichnet, dass** die Zähne (10, 11) jeweils eine polygonale, insbesondere rautenförmige Grundfläche und bevorzugt eine Pyramidenform aufweisen, wobei die Höhe der Zähne (10) jedes Grobbearbeitungsstegs (6, 8) größenordnungsmäßig der Tiefe der Mantelrillen jedes Feinbearbeitungsstegs (5, 7) entspricht, insbesondere dem 0,5 - 1,5-fachen der Tiefe der Mantelrillen und beispielsweise gleich der Tiefe der Mantelrillen ist.

14. Fräser nach Anspruch 13, **dadurch gekennzeichnet, dass** die rautenförmige Grundfläche der Zähne (10, 11) jeweils eine sich überwiegend längs der Werkzeugachse erstreckende Längsdiagonale und eine sich überwiegend quer zur Werkzeugachse erstreckende Querdiagonale aufweist, wobei die Längsdiagonalen der Zähne (11) an der einen Hälfte der Grobbearbeitungsstege (8) mit Linksdrall um die Werkzeugachse verlaufen und die Längsdiagonalen der Zähne (10) an der anderen Hälfte der Grobbearbeitungsstege (6) mit Rechtsdrall.

15. Fräser zur Bearbeitung von Oxidkeramiken, insbesondere zahnmedizinische Zirkonoxidkeramiken oder anderen pulverförmig zerspanenden Materialien wie Polyurethanguss, **gekennzeichnet durch** die Merkmale des Fräsers nach einem der vorhergehenden Ansprüche.

## Claims

1. A cutter, comprising a shank at one end and a tool tip at the other end, and flutes (1, 2, 3, 4) extending from the shank to the tool tip, which space machining lands (5, 6, 7, 8) apart from each other in the circumferential direction, wherein
at least one of the machining lands (6, 8) is designed as rough-machining land (6, 8) and at least one other of the machining lands (5, 7) as a fine-machining land (5, 7), and wherein
each of the machining lands (5, 6, 7, 8) has a circumferential working area with a cylindrical surface-segment-shaped shell surface, wherein
the working area of each rough-machining land (6, 8) is designed as a circumferential file with a plurality of teeth (10, 11) which are worked into the shell surface of the working area, and
the working area of each fine-machining land (5, 7) has a plurality of exterior grooves extending with a twist about a tool axis, which are worked into the shell surface of the working area parallel to each other and at an angle relative to the flute (1, 3) leading the at least one fine-machining land (5, 7), wherein the exterior grooves space apart exterior lands which each have a circumferential cutting edge (12, 13),
**characterized in that**
the tool tip is formed as a ball head section (9), in which the machining lands (5, 6, 7, 8) have a rounded contour, extending in particular along a ball head radius, wherein
the working areas on a first group (5, 6, 8) of the machining lands (5, 6, 8) reach further to the tool tip than on a second group (7) of the machining lands (5, 6, 7, 8), in which the working area of the respective machining land (7) ends further back, and wherein
the cutter is a cutter for electrode graphite.

2. The cutter according to claim 1, **characterized in that** the flutes (1, 2, 3, 4) extend with a right-hand twist about the tool axis.

3. The cutter for electrode graphite according to claim 1 or 2, **characterized in that** on at least a number (5, 6, 8) of the machining lands (5, 6, 7, 8), the working area there, which comprises teeth (10, 11) or circumferential cutting edges (12), extends into the rounded ball head section (9).

4. The cutter for electrode graphite according to claim 3, **characterized in that** on a remaining number (7) of the machining lands (5, 6, 7, 8) the working area there does not extend into the rounded ball head section (9).

5. The cutter for electrode graphite according to one of the preceding claims, **characterized in that** all working areas of the rough-machining lands (6, 8) which comprise teeth (10, 11) extend into the rounded ball head section (9) and at least not all working areas of the fine-machining lands (5, 7) which comprises circumferential cutting edges (12,13) extend into the rounded ball head section (9).

6. The cutter for electrode graphite according to one of the preceding claims, **characterized in that** it has an even number of fine-machining lands (5, 7), wherein the circumferential cutting edges (13) extend around the tool axis in the working area of the one half of the fine-machining lands (7) with right-hand twist and the circumferential cutting edges (12) extend in the working area of the other half of the fine-machining lands (5) with left-hand twist around the tool axis.

7. The cutter for electrode graphite according to claim 6, **characterized in that** the even-numbered plurality of fine-machining lands (5, 7) is equal to two.

8. The cutter for electrode graphite according to claim 6 or 7, **characterized in that** in each fine-machining land (5) having the working area with the left-twisted circumferential cutting edges (12) the working area extends into the ball head section (9), but not in any fine-machining land (7) having the working area with the right-twisted circumferential cutting edges (13).

9. The cutter for electrode graphite according to claim 6, 7 or 8, **characterized in that** the first part (5, 6, 8) of the machining lands (5, 6, 7, 8) comprises the half of the fine-machining lands (5) having the working area with the left-twisted circumferential cutting edges (12), and the remaining or second part (7) of the machining lands (5, 6, 7, 8) comprises the half of the fine-machining lands (7) having the working area with the right-twisted circumferential cutting edges (13).

10. The cutter for electrode graphite according to one of the preceding claims, **characterized in that** it has an even-numbered plurality of rough-machining lands (6, 8), wherein the same plurality is formed of the machining lands (5, 6, 7, 8) as rough-machining lands (6, 8) and as fine-machining lands (5, 7), and wherein each rough-machining land (6, 8) is trailed by one of the fine-machining lands (5, 7).

11. The cutter for electrode graphite according to claim 10, **characterized in that** the even-numbered plurality of rough-machining lands (6, 8) is equal to two.

12. The cutter for electrode graphite according to one of the preceding claims, **characterized in that** the machining lands (5, 6, 7, 8), at least in one region of the ball head section (9) adjoining the respective working area on the tip side, respectively comprise a cutting edge (14) in the entire ball head section or also in the further course of the flutes (1, 2, 3, 4) at the transition from their radially outwardly directed circumferential sides to their flanks facing the respective leading flute (1, 2, 3, 4), wherein at least one, preferably all machining lands (5, 6, 7, 8) comprise chip breaker grooves (15) on the cutting edges (14) in the tip-side region of the ball head section (9) distributed over the ball head radius (9).

13. The cutter for electrode graphite according to one of the preceding claims, **characterized in that** the teeth (10, 11) each have a polygonal, in particular diamond-shaped base surface and preferably a pyramidal shape, wherein the height of the teeth (10) of each rough-machining land (6, 8) corresponds in respect of magnitude to the depth of the exterior grooves of each fine-machining land (5, 7), in particular 0.5 to 1.5 times the depth of the exterior grooves and, for example, equal to the depth of the exterior grooves.

14. The cutter for electrode graphite according to claim 13, **characterized in that** the diamond-shaped base surface of the teeth (10, 11) each have a longitudinal diagonal extending predominantly along the tool axis and a transverse diagonal extending predominantly transversely to the tool axis, wherein the longitudinal diagonals of the teeth (11) extend on the one half of the rough-machining lands (8) with left twist around the tool axis and the longitudinal diagonals of the teeth (10) on the other half of the rough-machining lands (6) with right twist.

15. A cutter for machining oxide ceramics, in particular dental zirconium oxide ceramics or other powder-chipping machining materials such as polyurethane casting, **characterized by** the features of the cutter according to one of the preceding claims.

## Revendications

1. Fraise comprenant une tige à une extrémité et une pointe d'outil à l'autre extrémité ainsi que des rainures à copeaux (1, 2, 3, 4) qui s'étendant de la tige à la pointe d'outil et qui espacent des nervures d'usinage (5, 6, 7, 8) les unes des autres dans la direction circonférentielle,
dans laquelle l'une au moins des nervures d'usinage (6, 8) est conçue en tant que nervure de dégrossissage (6, 8) et au moins une autre des nervures d'usinage (5, 7) est conçue en tant que nervure de finition (5, 7), et dans laquelle
les nervures d'usinage (5, 6, 7, 8) présentent chacune une zone de travail circonférentielle avec une surface latérale en forme de segment de surface cylindrique, dans laquelle
la zone de travail de chaque nervure de dégrossissage (6, 8) est conçue en tant que lime circonférentielle ayant une pluralité de dents (10, 11) qui sont ménagées dans la surface latérale de la zone de travail, et
la zone de travail de chaque nervure de finissage (5, 7) présente une pluralité d'encoches de surface latérale qui s'étendent avec torsion autour de l'axe de l'outil et qui sont ménagées dans la surface latérale de la zone de travail en étant parallèles les unes aux autres et en présentant une pente par rapport à la rainure à copeaux (1, 3) située en amont de ladite au moins une nervure de finition, (5, 7), dans laquelle les encoches de surface latérale espacent des nervures de surface latérale comprenant chacune un tranchant circonférentiel (12, 13),
**caractérisée par le fait que**
la pointe d'outil est conçue en tant que portion de tête sphérique (9) dans laquelle les nervures d'usinage (5, 6, 7, 8) présentent chacune un contour arrondi, s'étendant en particulier le long d'un rayon de tête sphérique, dans laquelle
les zones de travail sur un premier groupe (5, 6, 8) de nervures d'usinage (5, 6, 7, 8) s'étendent plus vers la pointe d'outil que sur un deuxième groupe (7) de nervures d'usinage (5, 6, 7, 8), et dans laquelle la fraise est une fraise pour graphite d'électrode.

2. Fraise selon la revendication 1, **caractérisée par le fait que** les rainures à copeaux (1, 2, 3, 4) s'étendent avec torsion à droite autour de l'axe de l'outil.

3. Fraise selon la revendication 1 ou 2, **caractérisée par le fait que**, sur au moins une partie (5, 6, 8) des nervures d'usinage (5, 6, 7, 8), la zone de travail y située et présentant des dents (10, 11) ou des tranchants circonférentiels (12) s'étend dans la portion de tête sphérique (9) arrondie.

4. Fraise selon la revendication 3, **caractérisée par le fait que**, sur une partie restante (7) des nervures d'usinage (5, 6, 7, 8), la zone de travail y située ne s'étend pas dans la portion de tête sphérique (9) arrondie.

5. Fraise selon l'une quelconque des revendications précédentes, **caractérisée par le fait que** toutes les zones de travail des nervures de dégrossissage (6, 8), qui présentent des dents (10, 11), s'étendent dans la portion de tête sphérique (9) arrondie et que, au moins, ce ne sont pas toutes les zones de travail des nervures de finition (5, 7), présentant des tranchants circonférentiels (12, 13), qui s'étendent dans la portion de tête sphérique arrondie (9).

6. Fraise selon l'une quelconque des revendications précédentes, **caractérisée par le fait qu'**elle présente un nombre pair de nervures de finition (5, 7), dans laquelle les tranchants circonférentiels (13) dans la zone de travail de l'une des moitiés des nervures de finition (7) s'étendent avec torsion à droite autour de l'axe de l'outil et les tranchants circonférentiels (13) dans la zone de travail de l'autre moitié des nervures de finition (5) s'étendent avec torsion à gauche autour de l'axe de l'outil.

7. Fraise selon la revendication 6, **caractérisée par le fait que** le nombre pair de nervures de finition (5, 7) est égal à deux.

8. Fraise selon la revendication 6 ou 7, **caractérisée par le fait que**, sur chaque nervure de finition (5) présentant la zone de travail avec les tranchants circonférentiels (12) à torsion à gauche, la zone de travail s'étend dans la portion de tête sphérique (9), mais sur aucune nervure de finition (7) qui présente la zone de travail avec les tranchants circonférentiels (12) à torsion à droite.

9. Fraise selon la revendication 6, 7 ou 8, **caractérisée par le fait que** la première partie (5, 6, 8) des nervures d'usinage (5, 6, 7, 8) comprend la moitié des nervures de finition (5) présentant la zone de travail avec les tranchants circonférentiels (12) à torsion à gauche et la deuxième partie (7) des nervures d'usinage (5, 6, 7, 8) comprend la moitié des nervures de finition (7) présentant la zone de travail avec les tranchants circonférentiels (12) à torsion à droite.

10. Fraise selon l'une quelconque des revendications précédentes, **caractérisée par le fait qu'**elle présente un nombre pair de nervures de dégrossissage (6, 8), dans laquelle, parmi les nervures d'usinage (5, 6, 7, 8), le même nombre pair est réalisé en tant nervures de dégrossissage (6, 8) et en tant que nervures de finition (5, 7), et dans laquelle l'une des nervures de finition (5, 7) est située en aval de chaque nervure de dégrossissage (6, 8).

11. Fraise selon la revendication 10, **caractérisée par le fait que** le nombre pair de nervures de dégrossissage (6, 8) est égal à deux.

12. Fraise selon l'une quelconque des revendications précédentes, **caractérisée par le fait que** les nervures d'usinage (5, 6, 7, 8), au moins dans une zone de la portion de tête sphérique (9), qui suit, côté pointe, la zone de travail respective, présentent respectivement un tranchant (14) dans toute la portion de tête sphérique ou également en suivant le tracé des rainures à copeaux (1, 2, 3, 4), sur la transition de leurs faces circonférentielles montrant radialement vers l'extérieur à leurs flancs montrant vers la rainure à copeaux (1, 2, 3, 4) située respectivement en amont, dans laquelle au moins une, de préférence toutes les nervures d'usinage (5, 6, 7, 8) présentent des rainures brise-copeaux (15) sur les tranchants (14) dans la zone côté pointe de la portion de tête sphérique (9), qui sont réparties sur le rayon de tête sphérique (9).

13. Fraise selon l'une quelconque des revendications précédentes, **caractérisée par le fait que** les dents (10, 11) présentent chacune une surface de base polygonale, en particulier en losange et de préférence une forme pyramidale, dans laquelle la hauteur des dents (10) de chaque nervure de dégrossissage (6, 8) correspond en ordre de grandeur à la profondeur des encoches de surface latérale de chaque nervure de finition (5, 7), en particulier fait entre 0,5 et 1,5 fois la profondeur des encoches de surface latérale et est, par exemple, égale à la profondeur des encoches de surface latérale.

14. Fraise selon la revendication 13, **caractérisée par le fait que** la surface de base en forme de losange des dents (10, 11) présente chacune une diagonale longitudinale qui s'étend majoritairement le long de l'axe de l'outil ainsi qu'une diagonale transversale qui s'étend majoritairement transversalement à l'axe de l'outil, dans laquelle les diagonales longitudinales des dents (11) sur l'une des moitiés des nervures de dégrossissage (8) s'étendent avec torsion à gauche autour de l'axe de l'outil et les diagonales longitudinales des dents (10) sur l'autre moitié des nervures de dégrossissage (6) s'étendent avec torsion à droite.

15. Fraise destinée au traitement de céramiques d'oxyde, en particulier de céramiques d'oxyde de zirconium de médecine dentaire ou d'autres matériaux pulvérulents à enlèvement de copeaux, tels que la coulée de polyuréthane, **caractérisée par** les caractéristiques de la fraise selon l'une quelconque des revendications précédentes.
